Europäisches Patentamt

European Patent Office

Office européen des brevets

(19)

(11) **EP 1 202 166 B1**

(12) **EUROPÄISCHE PATENTSCHRIFT**

(45) Veröffentlichungstag und Bekanntmachung des Hinweises auf die Patenterteilung:
**06.08.2003 Patentblatt 2003/32**

(51) Int Cl.⁷: **G06F 9/44**

(21) Anmeldenummer: **00123320.4**

(22) Anmeldetag: **27.10.2000**

(54) **System zur Verifikation von Software-Anwendungsmodellen in Ketten von Software-Entwurfswerkzeugen**

System for verification of software application models in strings of software development tools

Système pour la verification de modèles de logiciels dans chaines d'outils pour developpement de logiciel

(84) Benannte Vertragsstaaten:
**DE GB**

(43) Veröffentlichungstag der Anmeldung:
**02.05.2002 Patentblatt 2002/18**

(73) Patentinhaber: **Interactive Objects Software GmbH**
**79100 Freiburg (DE)**

(72) Erfinder: **Uhl, Axel, Dipl.-Inform.**
**79117 Freiburg (DE)**

(56) Entgegenhaltungen:
**WO-A-99/23555        US-A- 5 437 037**

• **DOUGLASS B P: "DESIGNING REAL-TIME SYSTEMS WITH THE UNIFIED MODELING LANGUAGE" ELECTRONIC DESIGN,US,PENTON PUBLISHING, CLEVELAND, OH, Bd. 45, Nr. 20, 15. September 1997 (1997-09-15), Seite 132,134,136,13 XP000752106 ISSN: 0013-4872**

**Beschreibung**

Die Erfindung bezieht sich auf ein System zur Verifikation von Software-Anwendungsmodellen in Ketten von Software-Entwurfswerkzeugen.

Bei der Erstellung von IT-Systemen kommen vermehrt Werkzeuge und wiederverwendbare Softwarebausteine - auch Komponenten genannt - zum Einsatz, welche die Entwickler in ihrer Arbeit unterstützen. Dabei gibt es eine nahezu unüberschaubare Menge an Werkzeug- und Komponententypen. Beispiele sind einfache Texteditoren zum Bearbeiten von Quellcode, Werkzeuge zur Erfassung von Anforderungen an ein Software-System, Design-Werkzeuge, Übersetzer, Generatoren, Transaktionsmanagement-Systeme, Datenbanken oder ganze Ablaufumgebungen für Anwendungen, sog. *Application Server.* Je nach Ausgestaltung eines Software-Entwicklungsprozesses werden viele solcher Werkzeuge zusammengefaßt und miteinander integriert, wobei sich zumeist definiert durch den Prozeß eine klare Reihenfolge erkennen läßt, in der die Werkzeuge in der Entwicklung zum Einsatz kommen. In solchen Fällen kann von einer Werkzeugkette gesprochen werden. Am Ende eines vollständigen und korrekten Durchlaufs durch eine solche Kette steht üblicherweise ein lauffähiges Software-System.

Es gibt im Bereich des computergestützten Softwareentwurfs und der-entwicklung, auch *CASE - ComputerAided Software Engineering* genannt, eine Vielzahl von mächtigen Werkzeugen, teils als kommerzielle Produkte käuflich, teils als kostenlose Software beispielsweise aus dem Internet beziehbar. Interessant ist hier vor allem die Betrachtung bereits verfügbarer Werkzeug*ketten*, die als solche ausgeprägt sind.

Hier sind zum einen die "klassischen" integrierten Entwicklungsumgebungen, sog. *IDE - Integrated Development Environment* zu nennen, die sich in der Vergangenheit zumeist darauf beschränkten, eine nahtlose Integration zwischen Editor, Konstruktionshilfen für graphische Benutzungsschnittstellen, Übersetzer, Debugger und oftmals externen Werkzeugen wie z.B. Versionierungs- und Konfigurationsverwaltungswerkzeugen herzustellen. Nennenswerte Produkte in diesem Bereich sind SNiFF+ von der Firma TakeFive, jetzt WindRiver, JBuilder von der Firma Borland / Inprise, Symantec Cafe von der Firma Symantec oder Visual C++/J++ von der Firma Microsoft.

Zum anderen gibt es im Bereich der engeren Fassung des Begriffes *CASE* einige Werkzeugketten, die den Anwender von den frühen Phasen des Entwurfs, also z.B. der Analyse und der Erfassung der Anforderungen begleiten bis hin zur Erzeugung des lauffähigen Software-Systems. Beispiele hierfür sind die Werkzeuge der Firma *Rational,* die Produkte der Firma *Together* oder das Produkt *ArcStyler* von der Firma Interactive Objects Software GmbH.

Auch im akademischen Bereich gab es Forschung zum Thema der Integration von Werkzeugen zum Softwareentwurf. Hier ist besonders zu erwähnen das Projekt *STONE* (siehe Eduardo Casais, Claus Lewerentz, *STONE project monograph: Issues in Tool Integration,* Forschingszentrum Informatik, Karlsruhe, ISSN 0944-3037), das zu Teilen am Forschungszentrum Informatik an der Universität Karlsruhe TU durchgeführt wurde.

Beim Durchlaufen einer Werkzeugkette gibt es zahlreiche potentielle Fehlerquellen. Daher bieten die meisten Werkzeuge eine mehr oder weniger gut ausgeprägte Unterstützung in der Auffindung und Behebung von Fehlern an. Ein eingängiges Beispiel für die Fehlererkennung in solchen Werkzeugketten sind die syntaxbewußten Quellcodeeditoren. Dabei findet in der Regel eine farbliche Hervorhebung syntaktischer Elemente im Quellcode durch den Editor statt, so daß der Entwickler möglichst rasch und leicht Konstrukte im Code identifizieren kann, die von nachgeschalteten Werkzeugen, z.B. dem Übersetzer, für unzulässig erkannt würden. So erspart dieses Vorgehen in manchen Fällen einen unnötigen Übersetzerdurchlauf, der nur die bereits früher erkennbaren Fehler aufgedeckt hätte, um nach anschließender Überarbeitung der Eingaben wiederholt ausgeführt zu werden.

Dabei wird jedoch explizit im vorgeschalteten Werkzeug, im Beispiel dem Editor, Wissen über Randbedingungen eines nachgeschalteten Werkzeugs integriert. So enthält beispielsweise ein im Werkzeug *JBuilder* von der Firma *Borland / Inprise* integrierter Editor zwar die Regeln für die Syntax der Programmiersprache *Java*, nicht jedoch die der Sprache *Fortran.* Würden also mit diesem Editor Fortran-Quellen bearbeitet, so könnte der Editor keine Unterstützung im Syntax-Bereich mehr bieten. Wichtig zu erkennen ist also hier die Integration des Wissens über nachgeschaltete Werkzeuge als fester Bestandteil eines vorgeschalteten Werkzeugs beim Stand der Technik.

Für Werkzeuge, welche die höherwertige Semantik eines Software-Systems zu modellieren gestatten, sind solche antizipativen Fehlererkennungshilfen nicht verfügbar. Beispiele für solche Werkzeugtypen sind Analysewerkzeuge etwa zur Erfassung von Klassenkarten - die sog. *CRC*-Technik - *Class*, *Responsibility, Collaboration -* oder zur Beschreibung von Designs in Modellierungssprachen wie der *UML - Unified Modeling Language* (siehe auch James Rumbaugh, Ivar Jacobson, Grady Booch, *The Unified Modeling Language Reference Manual,* Addison Wesley Longman, Reading MA, 1999).

Erwähnenswert ist auch der Bereich der *Emulation* oder *Simulation.* Hier ahmen Softwaresysteme das Verhalten anderer Systeme nach. Zum Beispiel gibt es Software-Emulatoren für Mikroprozessoren. Der Nachteil emulativer Systeme ist, daß sie im Gegensatz zu einem *Modell* der Fähigkeiten eines Werkzeugs oder einer Komponente in der Regel keinerlei *Verkürzungsaspekt* gemäß der Modelltheorie aufweisen, also die Durchführung bestimmter Überprüfungen in keiner Weise vereinfachen. Anders gesagt ergibt sich durch Emulation in dem hier betrachteten Zusammenhang kein Vorteil gegenüber der tatsächlichen Umschaltung in das betreffende Werkzeug, da nur das ganze Werkzeug selbst "dupliziert" wird, nicht jedoch seine für die Fehleranalyse entscheidenden Regeln und Bedingungen.

Ein weiterer Bereich, in dem Eigenschaften von Systemen, Werkzeugen und Komponenten bereits früh in einem Entwurfsprozeß eine Rolle spielen, ist die Architektur, hier besonders der Bereich Hochbau. Dabei gehen die Eigenschaften etwa von Baumaterialien bereits in die Planungsphase ein. So beeinflußt beispielsweise die Tragfähigkeit von Stahlbeton den Entwurf der Decken in einem Hochhaus. Im Architekturbereich ist jedoch eine Formalisierung dieses Prozesses nicht gegeben. Das Problem wird hier durch vermehrte Kommunikation zwischen den beteiligten Personen gelöst. Beispielsweise werden in den Planungsprozeß neben dem Architekten auch Bauingenieure oder Statiker mit einbezogen, die dann den Architekten beim Entwurf unterstützen und von ihm geplante Konstruktionen auf Machbarkeit überprüfen.

Es ist eine zentrale Erkenntnis, nicht nur im Bereich der Informationstechnologie, daß die *frühzeitige* Erkennung und Behebung von Fehlern erheblich zur wirtschaftlichen Durchführung von Entwicklungsprojekten beiträgt. Mit wenigen Ausnahmen, z.B. vorgenannte Quellcode-Editoren, existiert jedoch eine antizipative Fehlererkennung entlang einer Werkzeugkette im Bereich des Softwareentwurfs bisher nicht. Dadurch werden viele Fehler erst spät in der Kette entdeckt, und es vergrößert sich somit die Anzahl an Durchläufen durch den Entwicklungszyklus zur Behebung dieser Fehler. Das ist aufwendig und kostet viel Zeit und Geld.

Ein ursächliches Problem ist dabei die Sicht eines jeden Werkzeugs entlang einer Kette, die eingeschränkt ist auf die von ihm bearbeiteten Aspekte des Gesamtsystems. Eine ganzheitliche Sicht fehlt.

Auch sind die wenigen vorhandenen Mittel, wie etwa Syntaxhervorhebung in Quellcodeeditoren, nur mit geringem semantischen Wissen über die tatsächlich zu prüfenden Bedingungen ausgestattet. Zum Beispiel können die meisten Quellcodeeditoren zwar Schlüsselwörter der Zielsprache erkennen und entsprechend hervorheben; die Überprüfung, ob die Verwendung des Schlüsselwortes an diese Stelle zulässig ist, unterbleibt jedoch in aller Regel.

Etwas weiter geht hier der Ansatz, den Werkzeuge im Bereich der Softwareentwicklung mit der Programmiersprache *Smalltalk* verfolgen. Dort sind der Quellcodeeditor und die syntaktische und semantische Analyse des Codes eng miteinander verwoben. Man könnte soweit gehen und von *einem* integrierten Werkzeug sprechen. Dadurch wird zwar auf der einen Seite eine rasche und einfache Prüfung des Quelltextes möglich, auf der anderen Seite ist die Anpassung der zu prüfenden Regeln und damit die Verwendung des Editors mit einer anderen Programmiersprache nicht mehr möglich.

Ein weiterer entscheidender Punkt ist, daß durch die Vielzahl verfügbarer Werkzeuge und Komponenten die daraus ableitbare Anzahl von verschiedenen möglichen und sinnvollen Werkzeugketten sehr groß ist. So könnte beispielsweise ein Design-Werkzeug prinzipiell zwar erkennen, daß ein bestimmtes Design nicht auf das gewählte Datenbankprodukt abbildbar ist, aber dazu fehlt es bis jetzt den Designwerkzeugen an offenen Schnittstellen, über die eine Beschreibung der Regeln nachfolgender Werkzeuge und Komponenten so erfolgen kann, daß sie vom Designwerkzeug überprüft werden könnten.

Daraus ergeben sich nachfolgend Probleme, soll einmal ein Werkzeug oder eine Komponente in der Kette ausgetauscht werden. Im schlimmsten Fall treten bestimmte Fehler erst in einem ausgelieferten System auf, weil sie zuvor unentdeckt blieben. Während man heute diesen Problemen durch massiven Testaufwand im Vorfeld einer Auslieferung begegnet, können durch verbesserte Werkzeugunterstützung bei der Früherkennung von Fehlern diese Aufwände erheblich reduziert werden.

Der Erfindung liegt die Aufgabe zugrunde, ein System anzugeben, das es ermöglicht, entlang einer Werkzeugkette frühzeitig im Entwurfsprozeß Fehler in dem im Entwurf befindlichen Software-Anwendungsmodell zu erkennen, und zwar übergreifend über die Aspekte aller beteiligten Werkzeuge und Komponenten entlang der Kette.

Diese Aufgabe wird gelöst durch ein System zur Verifikation von Software-Anwendungsmodellen in Ketten von Software-Entwurfswerkzeugen mit den im Anspruch 1 angegebenen Merkmalen. Vorteilhafte Ausgestaltungen sind in weiteren Ansprüchen angegeben und der nachstehenden Beschreibung von Ausführungsbeispielen zu entnehmen.

Bei der Erfindung handelt es sich um ein System, das es ermöglicht, Bedingungen und Regeln für ein Software-Anwendungsmodell so zu formulieren, daß sie anschließend auf ein bestehendes Software-Anwendungsmodell angewendet und das Modell somit auf Verträglichkeit mit diesen Bedingungen und Regeln *überprüft* werden kann. Die Regeln/Bedingungen können dabei zu *Gruppen* zusammengefaßt werden, die beispielsweise jeweils aus der Sicht eines einzelnen Werkzeugs oder einer einzelnen Komponente formuliert sind. Die Anwendung und Überprüfung der Regeln kann jedoch *unabhängig von einem bestimmten Werkzeug* zu beliebiger Zeit an beliebiger Stelle in der Werkzeugkette stattfinden. Die Gesamtmenge der jeweils gültigen Regeln/Bedingungen ergibt sich dann aus der Kombination derjenigen Regelgruppen zu den Werkzeugen und Komponenten, die in der verwendeten Werkzeugkette arrangiert wurden.

Die Beschreibung der Regeln erfolgt unter Verwendung der Schnittstelle des Modells, welche durch ein *Metamodell* definiert wird. Neben dem Modell kann eine Regel auf eine vom Software-Anwendungsmodell unabhängige *Parametermenge* zugreifen, welche beispielsweise die Fähigkeiten einer eingesetzten Softwarekomponente beschreibt und somit Anforderungen an das Modell beschreibt und / oder parametriert.

Das System läßt sich in folgende Teile untergliedern, die im Anschluß detailliert erläutert werden:

Grundlage ist das *Metamodell,* welches die Struktur von und Schnittstellen zu Modellen von Software-Systemen beschreibt und auf dem alle Werkzeuge in einer Kette aufbauen. Die Regeln und die diese überprüfenden Algorithmen sind in einem sogenannten *Verifier Framework* zusammengefügt. Regeln können *flexibel parametriert* werden, wobei ein spezielles Verfahren die Wiederverwendung von Parametergruppen erlaubt. Zuletzt wird noch die Integration der Regelprüfung in eine Werkzeugkette beschrieben.

Metamodell

Als Grundlage des hier verwendeten Metamodells für die Beschreibung von Modellen von Software-Systemen wird hier der UML-Standard eingesetzt. Damit sind die Basiselemente eines objektorientierten Software-Systems beschreibbar, beispielsweise *Classifier, Namespace, Operation, Parameter* oder *Generalization.* Die Erfindung ist jedoch auch auf Erweiterungen eines solchen Standard-Metamodells, z.B. UML profiles, oder auf beliebige andere Metamodelle anwendbar, z.B. wenn das Modell zusätzlich Zusammenhänge zwischen Teilen einer *Komponente zu* beschreiben erlaubt, wie dies der *CCM- CORBA Components* Standard vorsieht oder wenn Quellcodeelemente als Teile des Modells beschrieben werden.

Es muß eine definierte Schnittstelle geben, über die auf Instanzen des Metamodells, also auf Modelle von Software-Systemen, zumindest lesend zugegriffen werden kann. Dabei müssen über diese Schnittstelle die Eigenschaften der im Modell beschriebenen Elemente und deren Beziehungen untereinander abfragbar sein.

Verifier Framework, Anwendung von Verifiern auf Modellelemente

Wie bereits oben erwähnt werden Regeln zu Gruppen zusammengefaßt. Diese Gruppen werden mit dem Begriff *Verifier* bezeichnet. Das Verifier Framework regelt nun das Zusammenspiel der einzelnen Verifiers und deren Ausführung / Überprüfung gegen ein bestehendes Modell.

Grundidee des Frameworks ist es, eine Menge von Verifiern auf eine Menge von Modellelementen anzuwenden und dabei alle gefundenen Regelverletzungen aufzuzeichnen. Zu diesem Zweck muß das Framework folgende Fähigkeiten bieten:

- Zusammenstellung einer Menge anzuwendender Verifier

- Festlegung der Menge von Modellelementen, auf die die Menge von Verifiern anzuwenden ist

- Ausführung der Verifier auf allen zuvor festgelegten Modellelementen bei gleichzeitiger Protokollierung aller festgestellten Regelverletzungen

- menschen- und maschinenlesbare Präsentation der gefundenen Verletzungen sowie konstruktive Fehlerbehebungshilfen

Die Zusammenstellung der anzuwendenden Verifier erfolgt durch eine eigens dafür vorgesehene Komponente, den *Verifier Manager.* Über diese können dem Framework Verifier bekanntgegeben werden. Einzelne Verifier können damit dynamisch zu einem Überprüfungslauf hinzugenommen oder abgeschaltet werden. Dies kann dabei entweder programmatisch durch eine Anwendung geschehen, die sich der Funktionalität des Verifier Frameworks bedient, oder durch eine eigene interaktive Benutzungsschnittstelle des Frameworks.

Die Auswahl der Modellelemente, auf die die festgelegten Verifier anzuwenden sind, erfolgt durch explizite Auflistung. Zusätzlich kann für solche Modellelemente, die weitere Modellelemente enthalten, z.B. ein *Package,* festgelegt werden, ob die Regeln bei einem Durchlauf auch transitiv auf die enthaltenen Elemente angewendet werden sollen. Um also beispielsweise das gesamte Modell auf Regelverstöße zu überprüfen, müssen lediglich die *Package*-Modellelemente, die sich nicht in weiteren *Package*-Strukturen geschachtelt befinden, ausgewählt werden, und die Regeln müssen transitiv auf alle enthaltenen Modellelemente angewendet werden. Dadurch wird dann das gesamte Modell erfaßt.

Bei der Ausführung der Verifier gegen die Modellelemente nutzt das Framework die Tatsache aus, daß jeder Verifier eine - jeweils die gleiche - Schnittstelle zur Übergabe eines Modellelements zur Überprüfung durch diesen Verifier unterstützen muß. Somit kann das Framework homogen und durch Ausnutzung der objektorientierten Technik der *Polymorphie* jedem registrierten und ausgewählten Verifier jedes zur Überprüfung anstehende Modellelement über diese Schnittstelle zur Prüfung vorlegen. Das Ergebnis einer jeden solchen Prüfung ist eine Liste gefundener Regelverletzungen, die jeweils genügend Information enthalten müssen, um daraus eine informative Meldung für den Anwender abzuleiten, so daß für diesen der gefundene Verstoß eindeutig identifizierbar und somit behebbar wird. Entlang der Ausführung aller selektierten Verifier auf alle festgelegten Modellelemente werden diese Regelverletzungslisten gesammelt und zusammengefügt, so daß am Ende eine einzige Gesamtliste entsteht, die dem Anwender präsentiert werden kann.

Es ist hierbei wichtig zu erwähnen, daß eine Regel auch spezifisch für bestimmte Arten von Modellelementen sein kann. Es ist die Aufgabe des Verifiers, zu bestimmen, welche seiner enthaltenen Regeln er *tatsächlich* auf ein an ihn zur Überprüfung übergebenes Modellelement anwendet.

Bei der Präsentation der Regelverletzungen werden folgende Aspekte einer Verletzung berücksichtigt: Die *Schwere* der Verletzung, also z.B. "Warnung" oder "Fehler", Auswirkungen des Fehlers oder der Warnung, z.B. Performance-Einbußen, ein *informativer Text* im Sinne einer Fehlermeldung, konstruktive Hinweise zur Behebung des Fehlers und eine *Liste beteiligter Modellelemente*, aus der für den Anwender ablesbar ist, an welcher Stelle im Modell genau die Verletzung vorliegt und mitunter wie sie zustandekommt. Wenn das Werkzeug, in das die Prüfung integriert ist, die Kenntlichmachung von Modellelementen unterstützt, kann diese Eigenschaft ausgenutzt werden, um die beteilgten Modellelemente hervorzuheben. Diese Attribute der gefundenen Regelverletzungen lassen sich elegant in einer graphischen Präsentation zusammenfügen.

Flexible Parametrierung von Verifiem und die Überladungssemantik bei der Beschreibung dieser Regeln in Sequenzen von XML-Dateien

Das bisher Gesagte läßt weitestgehend offen, wie die Regeln und die durch sie ausgedrückten Ansprüche an das Modell formuliert werden. Soweit wurde nur gefordert, daß das Metamodell die Schnittstelle vorgibt, über die die Regeln auf das zu prüfende Modell des Software-Systems zugreifen können. Es gibt jedoch Randbedingungen, die weitergehende Überlegungen rechtfertigen:

Oftmals erfüllen Komponenten und Werkzeuge entlang einer Werkzeugkette bestimmte Standardaufgaben, für deren Erledigung nicht ausschließlich das spezielle, ausgewählte Werkzeug in Frage kommt. Andere Werkzeuge und Komponenten mögen weitestgehend die gleichen Anforderungen erfüllen, möglicherweise jedoch jeweils mit gewissen Abweichungen und Unterschieden. Daraus lassen sich entsprechend unterschiedliche Verifier ableiten, die zum einen Standardregeln, zum anderen spezielle Regeln für die Abweichungen des gewählten Werkzeugs bzw. der gewählten Komponente ausdrücken müssen.

Dieser Anforderung trägt der bisher beschriebene Teil des Verifier Frameworks nur bedingt Rechnung. Die Standardregeln könnten in separaten Verfiern ausgedrückt werden, die Regeln zu den Abweichungen in wieder anderen Verifiern. Der Verifier für ein Werkzeug bzw. eine Komponente ergibt sich dann durch Zusammenfügen der Verfier für die Standardregeln mit den Verifiem für die Abweichungen.

Oft sind die Unterschiede jedoch so beschaffen, daß ein eigener Verifier nicht gerechtfertigt erscheint und stattdessen die *Parametrierung* von Regeln angemessener ist. In solchen Fällen kommen *parametrierbare Verifier* zum Einsatz. Entscheidend dabei ist, daß *Parametersätze* für Standardregeln festlegbar sind, die dann im Falle von Abweichungen gezielt abgeändert und erweitert werden können, ohne dabei die Parameterfestlegungen für die Standardregeln selbst modifizieren oder kopieren zu müssen. Nur so ist gewährleistet, daß verschiedene Parametersätze gleichzeitig aus den Standardsätzen *ableitbar* sind, Änderungen an den Standardparametern sich auf alle abgeleiteten Sätze auswirken, die diese Änderungen nicht bereits speziell umdefinieren und daß die Standardparameter für weitere Ableitungen wiederverwendbar bleiben.

Dieses Prinzip lehnt sich an die Technik der *Vererbung* in objektorientierten Software-Systemen an, wo Klassen Eigenschaften definieren können, die dann von abgeleiteten Klassen überladen werden können. Auch dort sind die Ziele die Wiederverwendung der Oberklasse, die automatische Propagierung von Änderungen und Erweiterungen der Oberklasse auf bestehende Unterklassen und die Möglichkeit der flexiblen Anpassungen der Unterklassen auf die geänderten Anforderungen der Spezialisierung, die sie gegenüber der Oberklasse darstellen.

Es ergeben sich folgende Merkmale für die Formulierung von Parametern:

• Parameter werden zu *Parametersätzen* zusammengefaßt

• Parameter sind innerhalb eines *Namensraumes* eindeutig identifizierbar

• Es kann eine Sequenz mehrerer Parametersätze in einem Namensraum vereinigt werden, wobei durch die Reihenfolge eine Überladungssemantik für Parameter gleichen Namens im Kontext dieses Namensraumes definiert wird.

*Formalisierung der Überladungssemantik:*

Sei $s := \{s_1, ..., s_r\}$ eine Sequenz von Parametersätzen mit $s_i := \{(n_{i1}, p_{i1}), ..., (n_{im(i)}, p_{im(i)})\}$. Der Satz mit der Ordnungsnummer $i$ besteht also aus einer Menge von $m(i)$ Paaren, deren erstes Element den Namen des Parameters im Namensraum und deren zweites Element den Parameterwert angibt. Dann ergibt sich der Wert $p$ des Parameters mit dem Namen $n$ im Kontext der Sequenz von Parametersätzen $s$ mit obiger Definintion wie folgt:

$$p := \begin{cases} p_{ij} \text{ falls } n_{ij} = n \wedge \forall i < k \leq r : \forall 1 \leq l \leq m(k) : n_{kl} \neq n \\ \text{undefiniert sonst} \end{cases}$$

*Implementierung mit Sequenzen von XML-Dateien*

Eine Implementierung dieser Semantik kann z.B. so erfolgen, daß s abgebildet wird auf eine *Sequenz von XML-Dateien* $\{d_1, ..., d_r\}$. Für eine Beschreibung des XML-Standards siehe auch Brett McLaughlin, Mike Loukides, *Java and XML*, first edition, O'Reilly & Associates, June 2000, ISBN 0596000162. Der Namensraum ist bestimmt durch die Ausdrucksmöglichkeiten von XML, das im wesentlichen zwischen sogenannten *Elementen* und *Attributen* unterscheidet. *Element-* und *Attributstruktur* können vorgegeben werden durch die für $d_1, ... , d_r$ einheitliche *DTD* - Document *Type Definition*. Dabei sind Elemente benannt und können geschachtelt werden; jedes Element kann eine Menge von benannten Attributen aufweisen, die jeweils einen Wert zugewiesen haben können. Weiterhin können Elemente beliebigen Text in einem Textkörper enthalten, der jedoch hier nicht weiter betrachtet werden soll.

Der Name läßt sich somit eindeutig als ein Elementpfad, also ein *Pfad* im Gegensatz zu einem einfachen *Namen* aufgrund der potentiellen Schachtelung der Elemente, und abschließend den Namen des Attributs des letzten Elements in diesem Pfad formulieren. Der Parameterwert ist definiert als der Wert des ausgewählten Attributes. Er kann somit alle Werte annehmen, die ein XML-Attribut annehmen kann.

Eine XML-Datei $d_i$ beschreibt also einen Parametersatz $s_i$. Ein Name $n$ wird realisiert als *Pfad*, der die Namen von geschachtelten Elementen in der Schachtelungsreihenfolge und am Ende den Namen eines Attributs des innersten Elements enthält. Der Wert des Attributs in der XML-Datei stellt den Wert des Parameters innerhalb des Satzes $s_i$ dar. Die Überladungssemantik kann dann wie oben formalisiert angewendet werden.

*Veranschaulichung, Vorzüge:*

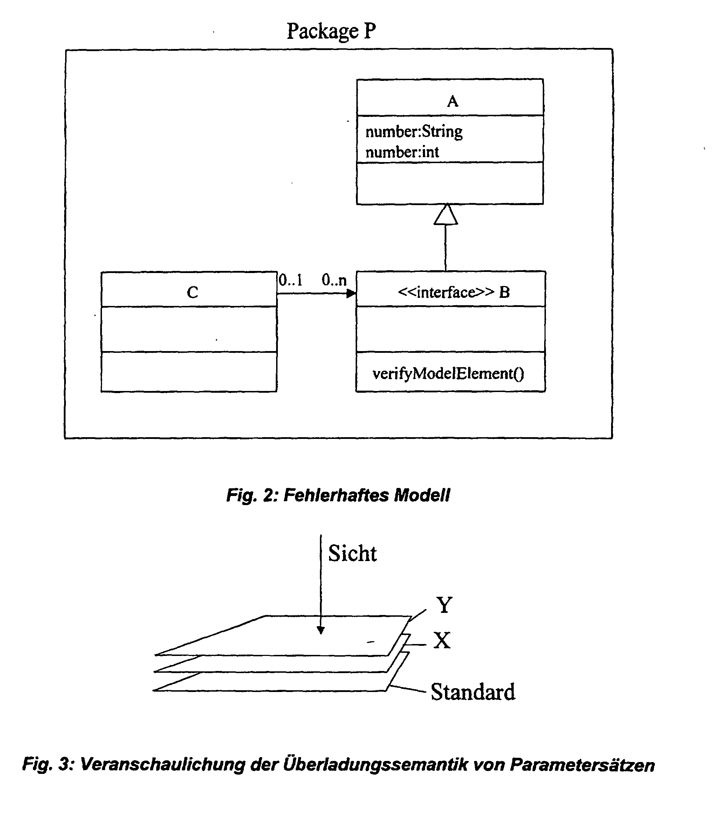

Bildlich gesprochen ergibt sich durch dieses Verfahren ein "Stapel" von Dateien, die erste Datei $d_1$ der Liste zuunterst, die letzte $d_r$ zuoberst, wobei gleichnamige Parameter übereinanderliegen, "undurchsichtig" sind und somit "weiter unten" liegende Parameterwerte überdecken, wohingegen Parameter nach oben "durchscheinen", wenn darüberliegende Dateien sie nicht überladen. Siehe dazu die Abbildungsfiguren Fig. 3 bis Fig. 7.

In dieser Anordnung repräsentieren die weiter unten liegenden Dateien die Standards, die dann von spezielleren Parametern für die Abweichungen angepaßt werden können.

Mit dieser Implementierung sind Parametersätze z.B. mit einem einfachen Texteditor bearbeitbar, eine Übersetzung als ein separater Schritt zur Nutzbarmachung dieser Informationen, wie dies etwa bei Implementierung eines Parametersatzes als Java-Programm anfallen würde, entfällt.

Ein parametrierbarer Verifier hat nun neben dem Zugriff auf das Modell des Softwaresystems zusätzlich die Menge definierter Parameter zur Verfügung, die sich aus der Zusammenstellung der beschriebenen Sequenz von XML-Dateien ergibt und kann deren Werte in die Auswertung der Regeln mit einbeziehen.

Integration des Verifier Frameworks in Werkzeugketten

Die Art und Weise, auf die die Regelprüfung in die Werkzeugkette integriert wird, hängt stark von der Beschaffenheit der Kette selbst ab, unter anderem von der Semantik der einzelnen Schritte und der Erweiterbarkeit der verwendeten Werkzeuge. Elegant, aber nicht zwingend notwendig, ist natürlich die Integration in ein bestehendes Werkzeug hinein, so daß die Regelprüfung noch im Werkzeug selbst erfolgen kann und somit die Zeit und der Aufwand für das Hin- und Herschalten zwischen Werkzeug(en) und Regelprüfung entfällt.

Bieten die Werkzeuge diese Funktionalität jedoch nicht, so kann dennoch eine Regelprüfung durch Ausführung als separates Werkzeug erfolgen, welches dann an einer oder mehreren Stellen in die Werkzeugkette integiert wird.

Eine weitere Erläuterung der Erfindung erfolgt anhand von Zeichnungsfiguren. Es zeigen:

Fig. 1: Übersicht Verifier Framework am Beispiel UML/Java/J2EE,
Fig. 2: Fehlerhaftes Modell,

Fig. 3: Veranschaulichung der Überladungssemantik von Parametersätzen,
Fig. 4: Standardparameter für einen parametrierbaren Verifier,
Fig. 5: Erste Überladung von Parametern für einen parametrierbaren Verifier,
Fig. 6: Zweite Überlagung von Parameters für einen parametrierbaren Verifier und
Fig. 7: Ergebnis der angewendeten Überladungssemantik.

Die Diagramme in diesem Abschnitt orientieren sich an der UML-Notation.

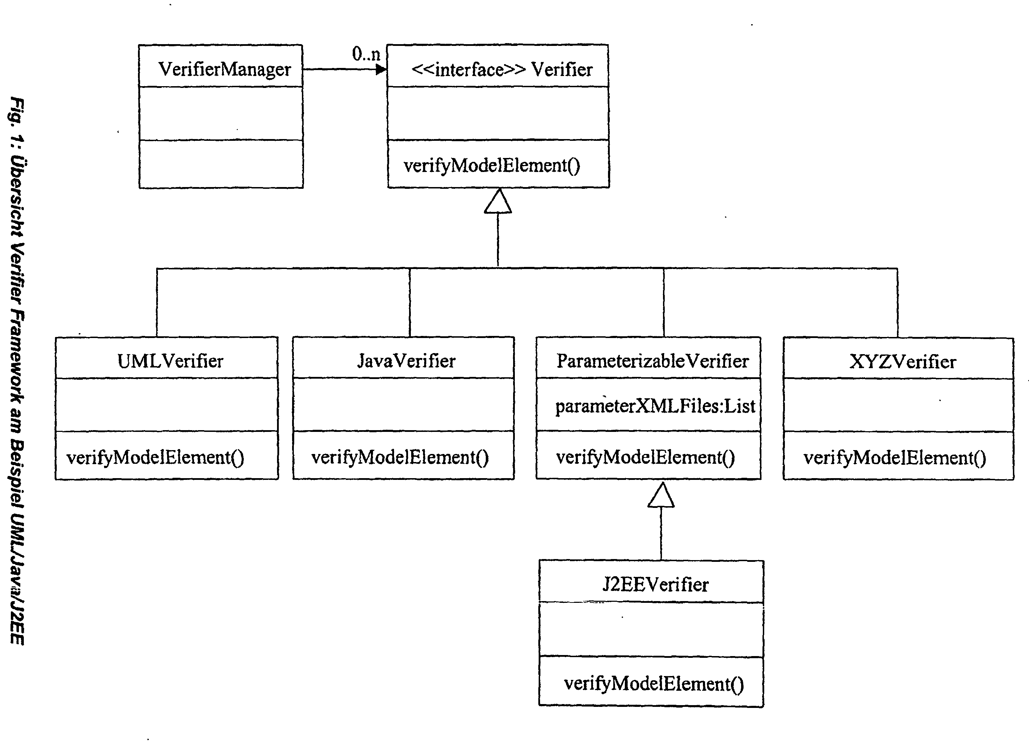

Fig. 1 zeigt den Verifier Manager, seine Beziehung zu den Verifiem und die Struktur der verschiedenen Verifier. Der Manager kennt eine beliebige Anzahl von Verifiem. Dabei ist *Verifier* selbst nur eine Schnittstellenbeschreibung, wie am Stereotyp «interface» zu erkennen ist, welche die Methodenschnittstelle zum Anwenden des Verifiers auf ein Modellelement definiert. Im Bild sind verschiedene Verifier-Varianten gezeigt, unter anderem ein Verifier, der das Modell auf UML-Regeln prüfen soll, im Beispiel der *UMLVerifier*, einer, der es auf Regeln der Sprache *Java* überprüfen soll und ein parametrierbarer Verifier, der die J2EE-spezifischen Regeln prüfen soll. Eine Beschreibung des J2EE-Standards findet sich beispielsweise in Paul Perrone, Venkata S.R.K.R. Chaganti, *Building Java Enterprise Systems with J2EE,* Sams; June 2000, ISBN: 0672317958. Im Bild ist die wichtige Beziehung zwischen den Verifier-Implementierungen und der *Verifier*-Schnittstelle festgehalten: Die konkreten Verifier *implementieren* die Verifier-Schnittstelle, können somit dem Verifier Manager bekanntgegeben werden, und dieser kann sie polymorph verwenden, um Modellelemente durch sie prüfen zu lassen.

Fig. 2 zeigt ein beispielhaftes Modell. An ihm soll die Anwendung einer Menge von Verifiern auf eine Menge von Modellelementen erläutert werden. Es sei das Verifier-Modell aus Fig. 1 zugrunde gelegt. Auf das in Fig. 2 gezeigte Package $P$ soll also die folgende Liste von Verifiern angewendet werden, und zwar auch auf seine enthaltenen Elemente: <*UMLVerifier, JavaVerifier*>. Dabei prüfe der *UMLVerifier* die Regel, daß ein Interface nie ein Nicht-Interface spezialisieren kann. Der *JavaVerifier* prüfe die Bedingung, daß kein Classifier mehr als ein Attribut mit demselben Namen enthält. Nun wird zuerst der *UMLVerifier* auf Package $P$ angewendet. Für ein Package wendet der Verifier im Beispiel keine Regel an. Anschließend, da auch alle enthaltenen Modellelemente des Packages zu verifizieren sind, wird dem Verifier der Reihe nach Modellelement $A,$ dann $B$ und dann $C$ übergeben. Während bei A und C keine Regel des *UMLVerifiers* verletzt ist, entdeckt er bei $B$, daß hier ein Interface, nämlich $B$, ein Nicht-Interface, hier $A$ spezialisiert. Damit ist eine Regel verletzt, und es wird eine entsprechende Fehlermeldung mit den Classifiem $A$ und $B$ als beteiligten Modellelementen zusammen mit einer beschreibenden Fehlermeldung in die Ergebnisliste eingefügt.

Der *JavaVerifier* bekommt auf die gleiche Weise die Classifier $A, B$ und $C$ übergeben und stellt bei $A$ die Verwendung zweier Attribute mit dem gleichen Namen fest. Damit ist eine seiner Regeln verletzt und es wird wieder ein Fehlerprotokoll an die Ergebnisliste angehängt.

Fig. 3 zeigt die Überlagerung mehrerer XML-Dateien zur Definition von Parameterwerten, auf die ein parametrierbarer Verifier zugreifen kann. Im Beispiel sind drei Dateien dargestellt: eine zur Beschreibung von Standardparametern, eine zur Überlagerung und Erweiterung der Standardparameter mit speziellen Werten für ein Produkt $X$, und eine dritte für zusätzliche Erweiterungen und Umdefinitionen für ein weiteres Produkt $Y$. Die Grafik soll verdeutlichen, daß in dieser Anordnung "weiter oben" liegende Parameterwerte solche, die "weiter unten" liegen, verdecken.

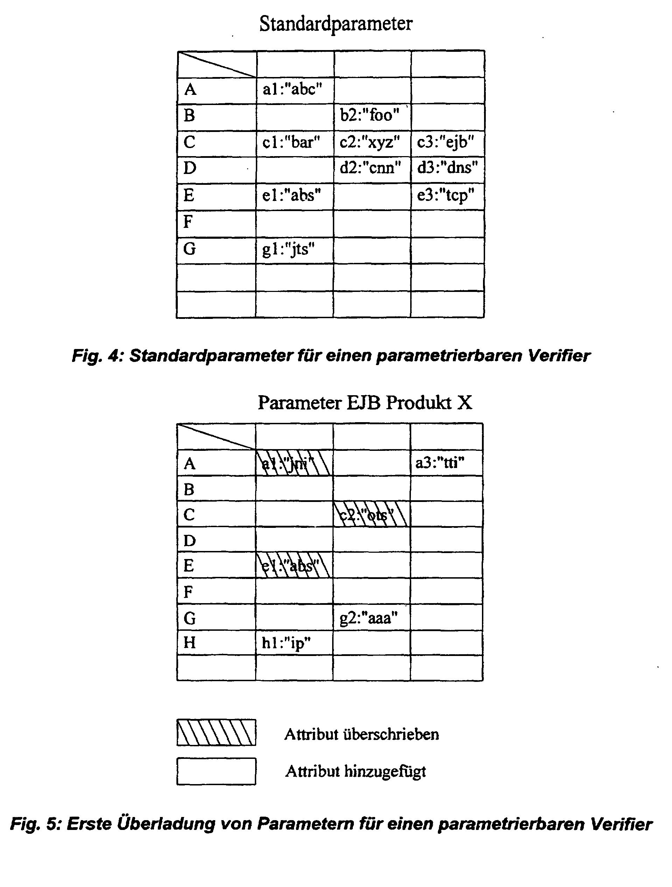

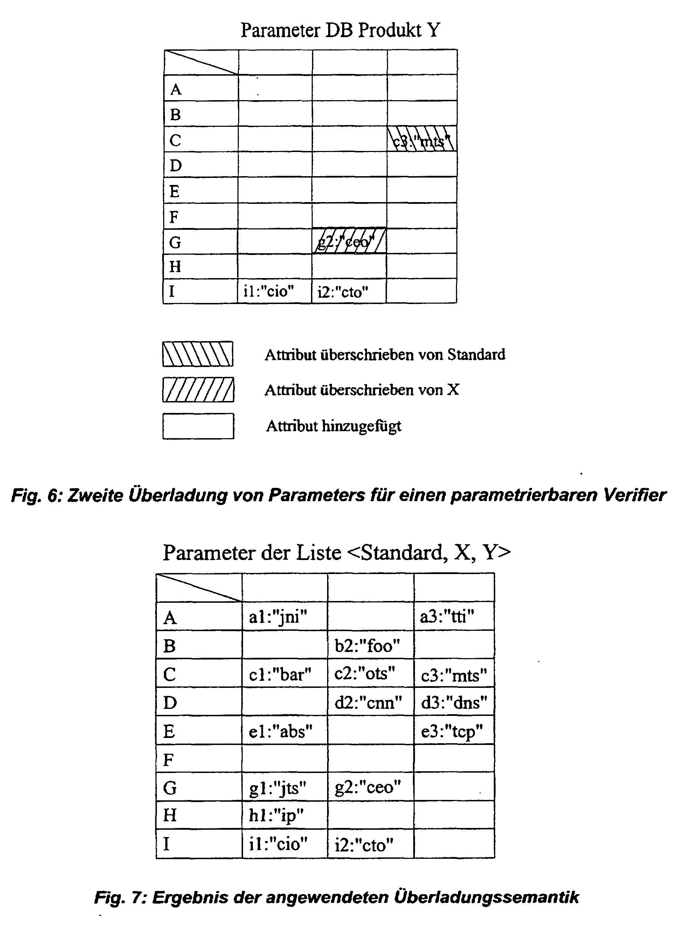

Die Abbildungsfiguren Fig. 4 bis Fig. 7 zeigen ein Beispiel für die Überlagerung mehrerer Parameterdateien. Fig. 4 zeigt die Menge der Standardparameter. Fig. 5 zeigt die Parameter für Werkzeug / Komponente $X$ und Fig. 6 zeigt diejenigen für Werkzeug /Komponente $Y$. Fig. 7 schließlich zeigt das Ergebnis der Überlagerung in der Reihenfolge <*Standard, X*, *Y*>.

Das ganze sei nochmals am Beispiel aus Fig. 2 demonstriert. Gegeben seien die folgenden XML-Parameterdateien *default.cap*, *associations.cap* und *ejbContainerX.cap* mit den folgenden auszugsweisen Inhalten:

default.cap:

```
...

<associations

        InterfaceFromInterface="supported"

        InterfaceFromClass="supported"

        ClassFromClass="supported"

/>

...
```

associations.cap:

```
...

<associations

        c01-01="supported"

        c01-0n="not_supported"

        c0n-0n="not_supported"

/>

...
```

ejbContainerX.cap:

```
...

<associations

        c01-0n="supported"

/>

...
```

Der *J2EEVerifier* prüfe die Multiplizitäten der im Modell auftretenden Assoziationen zwischen Classifiem und die Stereotypen der Classifier an den Assoziationsenden, also z.B. ob eine Beziehung zwischen Interface und Class zulässig ist, oder ob eine Beziehung zwischen zwei Interfaces erlaubt sein soll. Die Menge der erlaubten Multiplizitäten werde dabei aus den angegeben XML-Parameterbeschreibungsdateien gewonnen, und zwar im ersten Durchlauf mit der Dateiliste *<default.cap*, *associations.cap>*. Bekommt der Verifier das Modellelement übergeben, welches die Assoziation aus Fig. 2 zwischen *C* und *B* prüft, dann werden folgende Parameter angefordert: *associations:InterfaceFromClass*, da es sich um eine Assoziation von einem Classifier ohne speziellem Stereotyp, also "Class" und einem Classifier mit dem Stereotyp "«interface»" handelt; und *associations:c01-0n*, da das eine Assoziationsende die Multiplizität "0..1" und das andere "0..n" aufweist. Während der Verifier für den ersten Parameter "*supported*" als Wert erhält, was die Beziehung zwischen Class und Interface für erlaubt erklärt, erhält er für den zweiten Parameter den Wert "*not_supported*", wie in *associations.cap* definiert. Es wird folglich ein Fehlerreport erzeugt, der die *B* und *C* als beteiligte Modellelemente nennt und auf die Verletzung der erlaubten Multiplizitäten hinweist.

Wird nun zu der Liste der Dateien noch die Datei *ejbContainerX.cap* hinzugenommen, ergibt sich die Liste *<default.cap, associations.cap, ejbContainerX.cap>*. Wird mit dieser Liste der zuvor beschriebene Durchlauf wiederholt, so meldet der Verifier diesmal keine Regelverletzung, da die Multiplizitätenkombination 0..1/0..n durch die Angabe in *ejbContainerX.cap* als "*supported*" erklärt wurde. So kann also ohne einen Eingriff in den Verifier seine Regelmenge einfach und unter Einhaltung der zuvor genannten Bedingungen wie etwa Wiederverwendbarkeit der Standardparameterwerte erweitert /modifiert werden.

**Patentansprüche**

1.  System zur Verifikation von Software-Anwendungsmodellen in Ketten von Software-Entwurfswerkzeugen, übergreifend über die Aspekte aller beteiligten Warkzeuge und Komponenten entlang einer Kette, wobei

    a) die Anwendungsmodelle Instanzen eines Metamodells sind, welches die Struktur von Modellen einer Software-Anwendung sowie Schnittstellen zu diesen Modellen beschreibt, und auf dem alle Werkzeuge der Werkzeugkette aufbauen,

    b) ein Verifier-Framework einschließlich einem Verifier-Manager sowie mehrere Verifier existieren, wobei ein Verifier jeweils als eine Gruppe von formulierten Bedingungen und Regeln für die Modelle von Software-Anwendungen gebildet wird und die Gesamtmenge der jeweils gültigen Regeln und Bedingungen sich ergibt aus der Kombination derjenigen Regelgruppen zu den Werkzeugen und Komponenten, die in der verwendeten Werkzeugkette arrangiert wurden, und mittels des Verifier-Managers Verifier-Gruppen im Verifier-Framework zur Prüfung festgelegter Modellelemente zusammengestellt werden, und

    c) das System dafür eingerichtet ist, die Verifizierung von Software-Anwendungsmodellen bezüglich Verträglichkeit mit den formulierten Bedingungen und Regeln mittels eines Überprüfungslaufs unter Verwendung des Metamodells durch Ausführung der anzuwendenden Verifier auf den zuvor festgelegten Modellelementen vorzunehmen, wobei sich als Ergebnis die festgestellten Bedingungs- oder Regelverletzungen ergeben.

2.  System nach Anspruch 1, **dadurch gekennzeichnet, daß** das Metamodell auf dem UML(Unified Modeling Language)-Standard basiert.

3.  System nach einem der vorstehenden Ansprüche, **dadurch gekennzeichnet, daß** es dafür eingerichtet ist, parametrierbare Verifier zu bilden und zu verwenden, die es ermöglichen, in der Regelformulierung neben dem Anwendungsmodell auch auf die Werte dieser Parameter zuzugreifen und somit die Regeln durch Parametersätze anzupassen, ohne die Regeln selbst ändern zu müssen.

4.  System nach einem der vorstehenden Ansprüche, **dadurch gekennzeichnet, daß** der Verifier-Manager dafür eingerichtet ist,einzelne Verifier dynamisch zu einem Überprüfungslauf hinzuzunehmen oder abzuschalten.

5.  System nach Anspruch 4, **dadurch gekennzeichnet, daß** der Verifier-Manager dafür eingerichtet ist, die dynamische Zu- oder Abschaltung von Verifiern programmatisch durchzuführen, oder es zu ermöglichen, daß sie durch ein Anwenderprogramm erfolgt, das sich der Funktionalität des Verifier-Frameworks bedient, oder durch eine eigene interaktive Benutzungsschnittstelle des Verifier-Frameworks.

6.  System nach einem der Ansprüche 3, 4 oder 5, **dadurch gekennzeichnet, daß** es dafür eingerichtet ist, Parametersätze für parametrierbare Verifier aus Sequenzen von Parametersätzen zusammenzusetzen, bei denen entlang der Sequenz Parameterwerte überladen werden.

7.  System nach Anspruch 6, **gekennzeichnet dadurch, daß** die Parametersätze für paramerierbare Verifier in Textdateien im ASCII-Format abgelegt sind.

8.  System nach Anspruch 7, **dadurch gekennzeichnet, daß** als innere Struktur der Textdateien das XML-Format verwendet ist.

9.  System nach einem der vorstehenden Ansprüche, **dadurch gekennzeichnet, daß** das System in der Programmiersprache *Java* erstellt ist.

**Claims**

1. System for the verification of software application models in chains of software design tools with the following specifications:

   a) The application models are instances of a metamodel which describes the structure of a software application as well as the interfaces to these models. All tools along the tool chain are based on this metamodel.

   b) The system comprises a Verifier Framework including a Verifier Manager as well as several verifiers. Each verifier constitutes a group of formulated conditions and rules for one of the models of the software application. The Verifier Manager allows for the combination of verifier groups within the Verifier Framework for the verification of specified model elements.

   c) The system is designed for the verification of software models in terms of their compliance with the formulated conditions and rules by means of a verification run using the metamodel. The result of the verification run is a list of the violations of conditions and rules detected.

2. System according to claim 1 which is **characterized by** the fact that the metamodel is based on the UML(Unified Modeling Language) standard.

3. System according to one of the above claims which is **characterized by** the fact that it allows for the composition and usage of parameterizable verifiers. These parameterizable verifiers enable access to the values of these parameters in addition to the application model so that the rules can be modified by means of parameter sets without the rules themselves having to be modified.

4. System according to one of the above claims which is **characterized by** the fact that it provides a Verifier Manager which allows for the dynamic activation or deactivation of individual verifiers for specific verification runs.

5. System according to claims 4 which is **characterized by** the fact that the Verifier Manager is designed in such a way as to allow for the programmatic dynamic activation or deactivation of verifiers, or to enable an application program to do so by using the functionality of the Verifier Framework, or by using the separate interactive user interface of the Verifier Framework.

6. System according to one of the above claims 3, 4 or 5 which is **characterized by** the fact that it is designed in such a way as to allow for the composition of parameter sets for parameterizable verifiers on the basis of sequences of parameters sets which enable the redefinition of parameter values within the sequence by means of overruling semantics.

7. System according to claim 6 which is **characterized by** the fact that the parameter sets for parameterizable verifiers are stored as text files in ASCII format.

8. System according to claim 7 which is **characterized by** the fact that the XML format is used for the inner structure of the text files.

9. System according to one of the above claims which is **characterized by** the fact that the system is created in the programming language *Java*.


**Revendications**

1. Système de vérification de modèles d'applications au sein d'une chaîne d'outils de planification et d'implémentation avec les spécifications suivantes :

   a. Les modèles de l'application sont des instances d'un métamodèle. Le métamodèle décrit la structure de l'application ainsi que les interfaces pour les modèles. Tous les outils appartenant à la chaîne sont basés sur ce métamodèle.

   b. Le système comprend un ensemble d'outils de vérificateurs ('Vérifier Framework") incluant un gestionnaire de vérificateurs ("Verifier Manager") ainsi que plusieurs vérificateurs. Chaque vérificateur représente un ensemble de conditions et de règles bien définies pour les modèles des applications. Le gestionnaire de vérificateurs permet de combiner un ensemble de vérificateurs appartenant au "Verifier Framework" et permet ainsi la vérification de certains éléments spécifiés d'un modèle.

c. Le système est conçu pour permettre la vérification de la conformité des modèles des applications avec les conditions et les règles spécifiées. Le métamodèle sert de base au déroulement de la vérification dont le résultat représente une liste des violations détectées des conditions et règles spécifiées.

**2.** Système comme décrit à la revendication 1, **caractérisé par le fait que** le métamodèle est basé sur le standard UML (Unified Modeling Language).

**3.** Système conforme à l'une des revendications précédentes, **caractérisé par le fait qu'**il permet la composition et l'usage de vérificateurs paramétrables. Ces vérificateurs paramétrables permettent lors de la définition des règles d'accéder non seulement au modèle d'application mais également aux valeurs de ces paramètres et par conséquent d'adapter les règles par des ensembles de paramètres sans qu'il soit nécessaire de modifier les règles elles-mêmes.

**4.** Système conforme à l'une des revendications précédentes, **caractérisé par le fait que** le gestionnaire de vérificateurs permet l'activation et la désactivation dynamique de certains vérificateurs pour un certain déroulement de vérification.

**5.** Système conforme à la revendication 4, **caractérisé par le fait que** le gestionnaire de vérificateurs est conçu de manière à permettre l'activation et la désactivation dynamique des vérificateurs, ceci d'une manière programmatique ou bien à l'aide d'un programme d'application qui se sert des fonctionnalités du Verifier Framework ou bien en faisant appel a l'interface interactive du Verifier Framework.

**6.** Système conforme à l'une des revendications 3, 4 ou 5, **caractérisé par le fait qu'**il est conçu de manière à permettre la composition des ensembles de paramètres pour vérificateurs paramétrables sur la base de séquences d'ensembles de paramètres au cours desquelles d'autres valeurs peuvent être prises au sein de la séquence.

**7.** Système conforme à la revendication 6, **caractérisé par le fait que** les ensembles de paramètres des vérificateurs paramétrables sont enregistrés sous forme de fichiers de texte ASCII.

**8.** Système conforme à la revendication 7, **caractérisé par le fait que** le format XML est utilisé pour la structure interne des fichiers de texte.

**9.** Système conforme à l'une des revendications précédentes, **caractérisé par le fait que** le système est écrit à l'aide du langage de programmation Java.

**Fig. 1: Übersicht Verifier Framework am Beispiel UML/Java/J2EE**

Package P

**Fig. 2: Fehlerhaftes Modell**

**Fig. 3: Veranschaulichung der Überladungssemantik von Parametersätzen**

Standardparameter

| | | | |
|---|---|---|---|
| A | a1:"abc" | | |
| B | | b2:"foo" | |
| C | c1:"bar" | c2:"xyz" | c3:"ejb" |
| D | | d2:"cnn" | d3:"dns" |
| E | e1:"abs" | | e3:"tcp" |
| F | | | |
| G | g1:"jts" | | |
| | | | |
| | | | |

**Fig. 4: Standardparameter für einen parametrierbaren Verifier**

Parameter EJB Produkt X

| | | | |
|---|---|---|---|
| A | a1:"jni" | | a3:"tti" |
| B | | | |
| C | | c2:"ots" | |
| D | | | |
| E | e1:"abs" | | |
| F | | | |
| G | | g2:"aaa" | |
| H | h1:"ip" | | |
| | | | |

\\\\\\\\\  Attribut überschrieben

☐  Attribut hinzugefügt

**Fig. 5: Erste Überladung von Parametern für einen parametrierbaren Verifier**

## Parameter DB Produkt Y

| | | | |
|---|---|---|---|
| A | | | |
| B | | | |
| C | | | c3:"mts" |
| D | | | |
| E | | | |
| F | | | |
| G | | g2:"ceo" | |
| H | | | |
| I | i1:"cio" | i2:"cto" | |

| | |
|---|---|
| ⧄ Attribut überschrieben von Standard | |
| ⧄ Attribut überschrieben von X | |
| ☐ Attribut hinzugefügt | |

**Fig. 6: Zweite Überladung von Parameters für einen parametrierbaren Verifier**

## Parameter der Liste <Standard, X, Y>

| | | | |
|---|---|---|---|
| A | a1:"jni" | | a3:"tti" |
| B | | b2:"foo" | |
| C | c1:"bar" | c2:"ots" | c3:"mts" |
| D | | d2:"cnn" | d3:"dns" |
| E | e1:"abs" | | e3:"tcp" |
| F | | | |
| G | g1:"jts" | g2:"ceo" | |
| H | h1:"ip" | | |
| I | i1:"cio" | i2:"cto" | |

**Fig. 7: Ergebnis der angewendeten Überladungssemantik**